# EUROPÄISCHE PATENTSCHRIFT

(11) **EP 3 729 619 B1**
(45) Veröffentlichungstag und Bekanntmachung des Hinweises auf die Patenterteilung: **13.05.2026**
(21) Anmeldenummer: 18815190.6
(22) Anmeldetag: 06.12.2018
(51) Int. Cl.: H02K 3/26, H02K 41/03, H02K 1/27

(54) **ELEKTROMOTOR**
ELECTRIC MOTOR
MOTEUR ÉLECTRIQUE

(30) Priorität: 20.12.2017 DE 102017130724
(43) Veröffentlichungstag der Anmeldung: 28.10.2020
(73) Patentinhaber: Physik Instrumente (PI) SE & Co KG, 76228 Karlsruhe (DE)
(72) Erfinder: HAASE, Thomas, 76872 Steinweiler (DE); SERRER, Tobias, 76149 Karlsruhe (DE)
(74) Vertreter: Meissner Bolte Partnerschaft mbB
(86) Internationale Anmeldenummer: PCT/EP2018/083793
(87) Internationale Veröffentlichungsnummer: WO 2019/121037

(56) Entgegenhaltungen:
- EP-A2- 0 133 571
- DE-A1- 102015 222 482
- US-A1- 2002 185 919

## Beschreibung

Die Erfindung betrifft einen Elektromotor, mit einer Magnetspur, die eine Mehrzahl von in einer Längsrichtung gereihten Magnetelementen, insbesondere in Halbach-Array-Konfiguration, aufweist, und einer Spulenanordnung, die einen bezüglich der Stator-Magnetspur elektrisch und magnetisch im Wesentlichen nichtleitenden, derart konfigurierten Träger einschließt, dass die Spulenanordnung zu einer geführten Bewegung relativ zur Stator-Magnetspur befähigt ist, und die mindestens eine Gruppe von drei leitenden Flachspulen einschließt.

Linearantriebe erlangen seit Jahrzehnten in verschiedensten industriellen Anwendungen wachsende Bedeutung. Sie sind daher Gegenstand umfangreicher Entwicklungsarbeiten, von denen ein erheblicher Teil auf die möglichst effiziente und somit kostengünstige Herstellung bei Gewährleistung einer hohen Leistungsfähigkeit abzielt.

Linearmotoren schließen typischerweise mehrere Spulen oder Spulensätze ein, die benachbart zueinander angeordnet sind, und eine Mehrzahl von mit ihren Nord- und Südpolen alternierend längs einer Magnetspur angeordneten Magneten. Durch sukzessive Erregung der Spulen durch einen elektrischen Stromfluss lässt sich eine Bewegung der Spulenanordnung relativ zur Magnetanordnung, das heißt in der Magnetspur, bewirken.

Während die erwähnten Spulen normalerweise aus gewickelten Drähten aufgebaut sind, hat es seit einigen Jahren Bemühungen zu einer einfacheren Herstellung, in Form sogenannter Flachspulen, gegeben. Diese Entwicklungen stehen insbesondere vor dem Hintergrund des Bedarfs an kleineren bis hin zu miniaturisierten Linearmotoren, bei denen die herkömmliche Art der Herstellung der Spulen mit abnehmender Dimensionierung zunehmend unwirtschaftlich wird und letztlich einen begrenzenden Faktor für den Einsatz von Linearantrieben darstellen könnte.

Ein Linearmotor mit diesem neuartigen Aufbau ist beschrieben in der US 6,664,664 B2. Hier sind auf einem langgestreckten, nichtleitenden Träger nebeneinander Flachspulen angeordnet, die an die verschiedenen Phasen einer mehrphasigen Stromversorgung angeschlossen werden. Die Druckschrift lehrt auch die mehrschichtige Ausführung jeder Flachspule durch übereinander angeordnete im Wesentlichen identische Leiterverläufe in mehreren Leiterschichten einer Mehrebenen-Leiterplatte. Die geometrische Konfiguration dieser Flachspulen ist die eines Rechtecks, und jeweils außerhalb der Rechtecke sind Anschlussbereiche angeordnet, die Durchkontaktierungen durch die Mehrebenen-Leiterplatte hindurch umfassen.

Eine mehrschichtige Flachspulenanordnung ist auch aus der WO 2017/080859 A1 der Anmelderin bekannt, und zwar als Bestandteil einer Planar-Positioniervorrichtung bzw. eines Positioniertisches. Auch hierbei wird zur technischen Realisierung eine Mehrebenen-Leiterplatte benutzt, wobei mehrere zusammengehörige Flachspulen im größten Teil ihres Verlaufes als Leiterzüge einer ersten Leiterebene der Mehrebenen-Leiterplatte ausgeführt sind und Überkreuzungsbereiche der Flachspulen im Wesentlichen in einer zweiten Leiterebene der Mehrebenen-Leiterplatte verlaufen. Einschlägigen Stand der Technik bilden des Weiteren die US 2002/ 185919 A1 und die EP 0 133 571 A2.

Der Erfindung liegt die Aufgabe zugrunde, einen verbesserten Elektromotor anzugeben, der sich unter anderem durch einen erhöhten Wirkungsgrad bei kompakten Abmessungen auszeichnet und effizient und kostengünstig herstellbar ist.

Diese Aufgabe wird durch einen Elektromotor mit den Merkmalen des Anspruchs 1 gelöst. Zweckmäßige Fortbildungen des Erfindungsgedankens sind Gegenstand der abhängigen Ansprüche.

Die Erfindung schließt den Gedanken ein, mehrere (in der Praxis konkret drei) Flachspulen, von denen jeweils eine an die einzelnen Phasen einer mehrphasigen Stromversorgung (konkret eines Drehstromnetzes) angeschlossen ist, zur optimalen Ausnutzung der verfügbaren Leiterfläche einer ersten und zweiten Leiterebene auf einem nichtleitenden Träger ineinander zu verschachteln. Dies hat notwendigerweise zur Folge, dass bestimmte Leiterabschnitte der mehreren Flachspulen einander überlagern bzw. überkreuzen. Die erwähnte Verschachtelung wird im Hinblick auf die zwei verfügbaren Leiterebenen geometrisch derart bestimmt, dass an jedem Punkt Leiterzüge von höchstens zwei der drei Flachspulen übereinanderliegen. In jenen Bereichen, die nachfolgend als Überkreuzungsbereiche bezeichnet werden, sind die
Leiterzüge der einen der beiden Flachspulen in nur einer der beiden Leiterebenen gebildet, während die (überkreuzenden bzw. überlagernden) Leiterzüge der anderen Flachspule in der anderen der beiden Leiterebenen verlaufen. Hingegen werden in all jenen Abschnitten der ineinander verschachtelten Flachspulen, in denen sich keine Leiterzüge zweier Spulen überkreuzen, beide Leiterebenen für übereinanderliegende Leiterzüge einer der drei Flachspulen genutzt.

Sowohl das Konzept des Ineinander-Verschachtelns (anstelle eines Nebeneinander-Reihens) der innerhalb des mehrphasigen Speisungs-Schemas zusammengehörigen Flachspulen als auch die Nutzung großer Bereiche beider Leiterebenen oberhalb und unterhalb der isolierenden Zwischenschicht zur Ausführung der Leiterzüge jeweils einer der Flachspulen führen zu einer wesentlich verbesserten Ausnutzung der verfügbaren Leiterfläche, und das Konzept bietet zudem die Möglichkeit einer wesentlich kompakteren Ausführung der Flachspulengruppe als Ganzes und somit gegebenenfalls auch des Linearmotors insgesamt.

Außerdem hat die Anordnung ineinander verschachtelter Spulen eine Vergleichmäßigung der Kraftkonstanten in Längsrichtung des Trägers zur Folge, und sie ermöglicht den Einsatz von verbesserten Magnetanordnungen, die ohne magnetischen Rückschluss auskommen und somit leichter und kompakter ausgeführt werden können, speziell von sogenannten Halbach-Anordnungen.

Erfindungsgemäß sind die Magnetspur mit den gereihten Magnetelementen und die Flachspulen der Spulenanordnung in Abstimmung aufeinander derart bemessen, dass die Überkreuzungsbereiche der Flachspulen mindestens überwiegend außerhalb der Projektion der Magnetelemente auf die Spulenanordnung liegen. Inhomogenitäten des durch die Spulen induzierten Magnetfeldes in den Überkreuzungsbereichen bleiben damit weitgehend außerhalb des Bereiches der Wechselwirkung mit den Magneten, wodurch Störungen der Kraftkonstanten weitgehend vermieden werden.

In einer praktisch bedeutsamen Ausführung ist die Magnetspur einem Stator und die Spulenanordnung einem Läufer des Linearmotors zugeordnet, und beispielhaft weist der Stator im Wesentlichen die Gestalt eines langgestreckten U-Profils auf, und der Läufer ist in Anpassung an die Gestalt des U-Profils platten- oder bandförmig derart ausgeführt, dass er sich im Inneren längs des U-Profils bewegen kann. Dies ist die vorherrschende Ausführung eines Linearmotors; es sei aber darauf hingewiesen, dass die Zuordnung von Magneten und Spulenanordnung zu Stator und Läufer auch umgekehrt werden kann. Es ist auch nicht unabdingbar, dass der Stator die Gestalt eines U-Profils und der Läufer Platten- oder Bandform hat. Vielmehr sind auch andere geometrische Konfigurationen, etwa mit T- oder Doppel-T-Profilen, möglich. Die erforderliche präzise Abstandshaltung zwischen zwei Magnetanordnungen, die gemeinsam eine Magnetspur bilden und zwischen denen eine Spulenanordnung als Läufer aufgenommen ist, kann auch durch endseitige Abstandshalter gewährleistet werden. Ein solcher Stator hätte im Längsschnitt die Form eines langgestreckten Rechtecks, an dessen langen Seiten die beiden Magnetanordnungen sitzen.

In weiteren Ausführungen der Erfindung umfasst die Spulenanordnung zwei oder mehr Gruppen aus je drei jeweils mit einer Phase einer dreiphasigen Stromversorgung verbundenen Flachspulen, und die Dimensionierung der Spulenanordnung (insbesondere als Läufer) und der Magnetspur (insbesondere als Stator) erfolgt in Anpassung an den konkreten Einsatzzweck und dessen Randbedingungen und Parameter, insbesondere die benötigte Weglänge, die durch den Motor aufzubringende Kraft, den verfügbaren Bauraum etc.

In einer technologisch und somit kostenseitig besonders vorteilhaften Realisierung ist der Träger als Mehrebenen-Leiterplatte ausgeführt. Jeweils genau zwei benachbarte Leiterebenen ("erste" und "zweite" Leiterebene) der Mehrebenen-Leiterplatte sind zur Bildung der drei zusammengehörigen, überlappenden Flachspulen strukturiert. Die Technologie der Strukturierung von Mehrebenen-Leiterplatten, ebenso wie die Technik der Erzeugung von Verbindungen zwischen den verschiedenen Leiterebenen mittels Durchkontaktierungen (Vias), mit selektivem Anschluss der Vias an die jeweiligen Leiterzüge in den einzelnen Leiterebenen, sind etablierte, zuverlässige und kostengünstige Technologien, die ohne Weiteres zur Herstellung der erfindungsgemäßen Spulenanordnung genutzt werden können. Auch die zugehörigen Entwurfsverfahren stehen zur Verfügung.

Als wesentliche Vorteile sind die folgenden zu nennen:
- Minimierung der Entwicklungszeit neuer Motorbaugrößen mittels geeigneter Softwareschnittstellen und aufgrund mehrfacher Nutzbarkeit von Entwurfselementen und hoher Wiederholbarkeit von Baugruppen,
- einfache Fertigung,
- kurze Lieferzeiten,
- geringer Fertigungsaufwand und starke Kostenreduzierungen insbesondere bei hohen Stückzahlen.

Der im Zusammenhang mit der Erfindung mögliche Einsatz spezieller Magnetanordnungen (speziell in einem langgestreckten Stator) erbringt unter anderem folgende weitere Vorteile:
- Es wird die Realisierung einer einseitigen Magnetanordnung relativ zur Spulenbaugruppe ermöglicht, was wiederum eine besonders flache Bauweise ermöglicht.
- Durch den möglichen Verzicht auf einen magnetischen Rückschluss ist die Fertigung des Magnetträgers aus leichtgewichtigem, magnetisch nicht leitfähigem Material möglich.
- Es ist eine Reduzierung der magnetischen Streufelder möglich.
- Im Vergleich zu herkömmlichen Magnetanordnungen mit alternierender N-/S-Ausrichtung sind höhere Magnetfeldstärken realisierbar.

In einer Ausgestaltung der letztgenannten Ausführung ist der Träger als Mehrebenen-Leiterplatte mit 2m Leiterebenen (m≥2) ausgeführt, in der jede der drei zusammengehörigen überlappenden Flachspulen einer Gruppe 2 bis m in Reihe geschaltete im wesentlichen identische Leiterzüge umfasst, wobei die elektrischen Verbindungen zwischen den in Reihe geschalteten Leiterzügen mittels vertikaler Durchkontaktierungen durch die Mehrebenen-Leiterplatte ausgeführt sind.

In einer weiteren Ausführung der Erfindung weist jede der Flachspulen einen kleinen Anschluss- und Durchkontaktierungs-Bereich auf, der unmittelbar an einer Außenseite der jeweiligen Flachspule angeordnet ist. In diesem Anschluss- und Durchkontaktierungsbereich sind nicht nur die externen Anschlüsse, sondern auch Durchkontaktierungen zur Verbindung der übereinander angeordnet, in Reihe geschalteten Leiterzüge und zum externen Anschluss der Flachspule platziert. Es wird darauf hingewiesen, dass der genannte Anschluss- und Durchkontaktierungs-Bereich an einer Flachspulen-Außenkante typischerweise nicht sämtliche, sondern nur einen Teil aller Durchkontaktierungen der Spulenanordnung umfasst. Weitere Durchkontaktierungen sind, gemäß den oben erläuterten Merkmalen der Erfindung, an den Überkreuzungsbereichen erforderlich. In einer Ausgestaltung ist der kleine Anschlussbereich jeweils nahe einer Ecke einer im Wesentlichen rechteckförmigen Flachspulen-Konfiguration positioniert, und er umfasst einen hakenförmigen Leiterabschnitt.

In einer weiteren Ausführung der Erfindung sind die durch Strukturierung der jeweils zwei Leiterebenen der Mehrebenen-Leiterplatte gebildeten zusammengehörigen drei Flachspulen im Wesentlichen rechteckförmig konfiguriert und derart verschachtelt bzw. überlappend angeordnet, dass die langen Seiten der rechteckförmigen Leiterkonfigurationen in der ersten und zweiten Leiterebene jeweils parallel zueinander verlaufen und innerhalb des Rechtecks einer der drei Flachspulen jeweils der größte Teils des Leiterverlaufes je einer langen Seite der beiden anderen Flachspulen angeordnet ist.

Hiermit im Zusammenhang steht der Aspekt, dass alle Leiter der drei Flachspulen an den langen Seiten der rechteckförmigen Leiterkonfigurationen jeweils gleichen Abstand zueinander haben und innerhalb der zusammengehörigen drei Flachspulen kein größerer Abstandsbereich vorhanden ist. In einer weiteren Ausgestaltung ist der Abstand zwischen den benachbarten Leiterzügen kleiner als deren Breite, insbesondere kleiner als die Hälfte von deren Breite.

Insbesondere mit den letztgenannten Aspekten wird die weiter oben erwähnte, durch die verschachtelte bzw. überlappende Anordnung der den einzelnen Fasern zugeordneten Flachspulen ermöglichte effiziente Ausnutzung der Leiterflächen auf bzw. in dem Träger der Spulenanordnung realisiert. Anders als bei dem eingangs erwähnten Stand der Technik verbleibt innerhalb einer zusammengehörigen Spulengruppe praktisch keine Leiterfläche, die nicht für Leiterzüge einer Flachspule physikalisch wirksam genutzt wird.

Eine geometrisch sinnvolle Konfiguration zur Realisierung der erfindungsgemäßen Verschachtelung bzw. Überlappung sieht vor, dass in dem im Wesentlichen rechteckförmigen Leiterverlauf der Flachspulen jeweils eine (virtuelle) Ecke des Rechtecks durch schräg zu den kurzen und langen Seiten verlaufende Leiterabschnitte ersetzt ist. Im Entwurf ist dies speziell so ausgeführt, dass die schräg verlaufenden Leiterabschnitte der drei zusammengehörigen, überlappenden Flachspulen aneinander angrenzen und ineinander verschachtelt in der ersten und zweiten Leiterebene verlaufen und zum Zentrum des jeweiligen Rechtecks hinzunehmend kürzer werden.

In einer weiteren Ausgestaltung der Erfindung ist mindestens ein Teil der Leiterverläufe mindestens in einem Teil der Überkreuzungsbereiche verbreitert. Aufgrund der durch die Verbreiterung verringerten Strombelastung die verbreiterten Abschnitte der Leiterzüge wirken als Temperatursenken der jeweiligen Flachspule. Hierdurch werden Temperaturanstiege in anderen Abschnitten der Leiterzüge aufgefangen, die entwurfsbedingt nicht verbreitert ausgeführt werden können und daher eine größere Erwärmung aufgrund der erhöhten Strombelastung zeigen.

Weitere Vorteile und Zweckmäßigkeiten der Erfindung ergeben sich aus der nachfolgenden Beschreibung von Ausführungsbeispielen bzw. -aspekten anhand der Figuren. Von diesen zeigen:
- Fig. 1: eine schematische perspektivische Darstellung eines Linearmotors der erfindungsgemäßen Art,
- Fig. 2A bis 2C: schematische perspektivische Darstellungen eines weiteren Linearmotors der erfindungsgemäßen Art,
- Fig. 3: eine schematische Darstellung der Magnetpol-Ausrichtung in der Magnetspur eines Linearmotors der in Fig. 1 oder 2 gezeigten Art,
- Fig. 4: eine Darstellung der Leiterverläufe einer Flachspulengruppe aus drei zusammengehörenden Flachspulen, die erfindungsgemäß ineinander verschachtelt bzw. überlappt in bzw. auf einem Träger angeordnet werden,
- Fig. 5: eine Darstellung der zugehörigen Leiterzüge in einer ersten und einer zweiten Leiterebene des Trägers,
- Fig. 6: eine Darstellung der Spulengruppe mit den ineinander verschachtelten bzw. einander überlappenden drei Flachspulen,
- Fig. 7: eine schematische Darstellung von mehreren auf einem Träger aneinandergereihten und in mehreren Trägerschichten übereinander realisierten Flachspulen des in Fig. 6 gezeigten Aufbaus,
- Fig. 8: eine schematische Darstellung einer Mehrebenen-Leiterplatte, in der die Spulenanordnung nach Fig. 7 realisiert ist,
- Fig. 9: eine schematische Darstellung der Spulenanordnung aus Fig. 7 in Zuordnung zur Magnetspur eines Linearmotors, wie in Fig. 1 oder 2 dargestellt, und
- Fig. 10: eine schematische perspektivische Darstellung eines weiteren Elektromotors der erfindungsgemäßen Art.

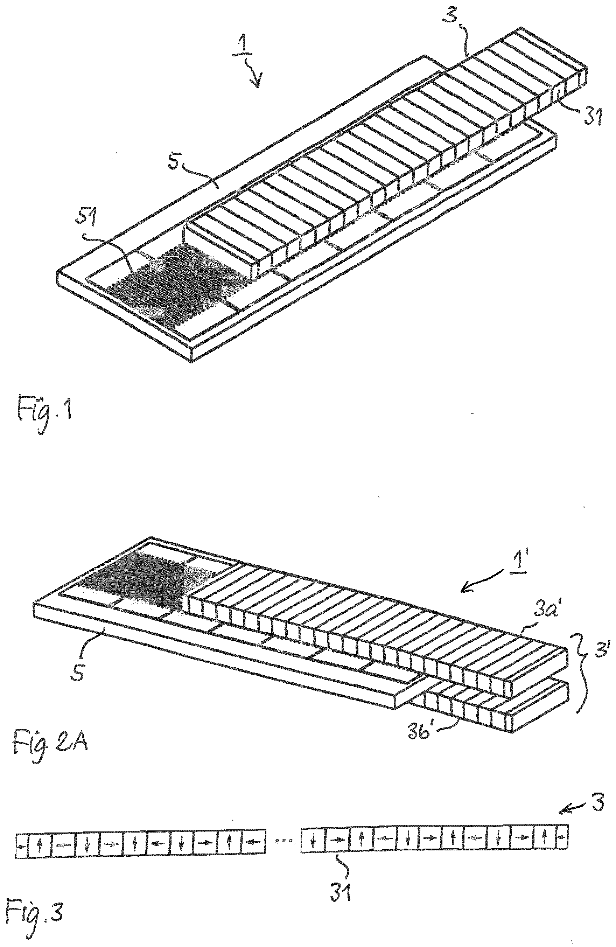

Fig. 1 zeigt skizzenhaft die Hauptkomponente eines elektrischen Linearmotors 1, nämlich eine langgestreckte bandförmige Anordnung 3 von dicht gereihten stabförmigen Permanentmagneten 31, und eine plattenförmige Spulenanordnung 5, die eine in die gleiche Richtung wie die Permanentmagnete gereihte Anordnung von Flachspulen 51 umfasst. Im Normalfall wird die Magnetanordnung 3, zusammen mit einer zugehörigen Tragstruktur, den Stator des Linearmotors bilden, während die Spulenanordnung 5 dessen Läufer bildet. Wie bereits aus der schematischen Darstellung deutlich wird, können die Funktionen Stator/Läufer auch kinematisch umgekehrt sein, weshalb im Folgenden und in den Ansprüchen die Magnetanordnung auch als "Magnetspur" und die gereihte Anordnung von Flachspulen als "Spulenanordnung" bezeichnet wird. In bekannter Weise wird durch eine sequenzielle Erregung der an verschiedene Phasen einer Mehrphasen-Stromversorgung angeschlossenen Flachspulen (siehe weiter unten) und den sequenziellen Aufbau entsprechender Magnetfelder eine Bewegung des Läufers längs des Stators bewirkt.

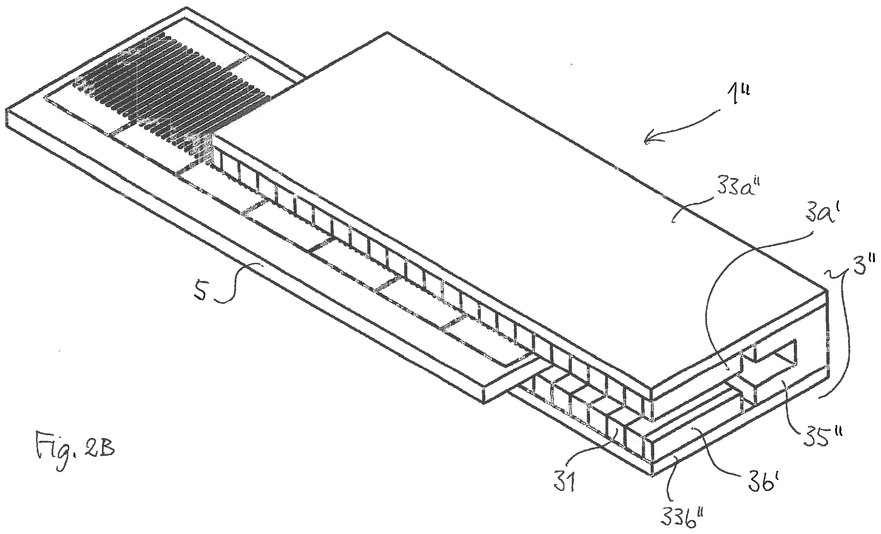

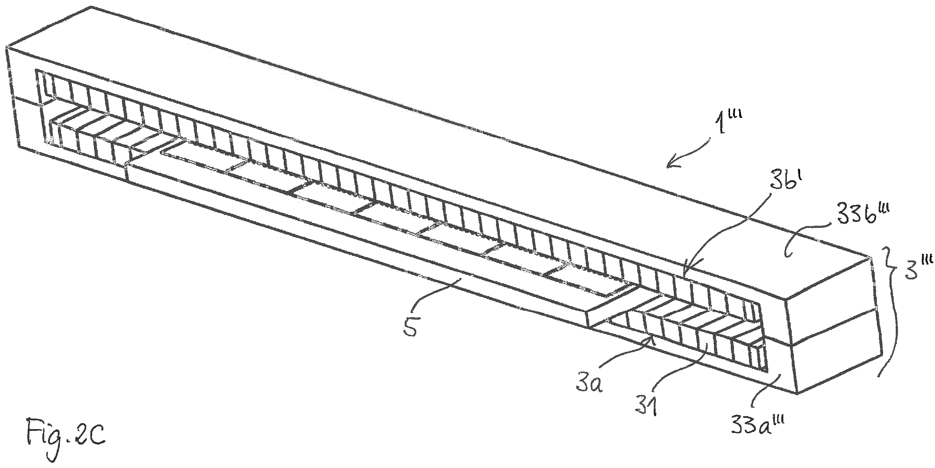

Fig. 2A bis 2C zeigen modifizierte Ausführungen des Linearmotors, die - bei ansonsten gleichem Aufbau - eine Magnetspur 3' aus zwei übereinanderliegenden bandförmigen Magnetanordnungen 3a' und 3b' umfasst. Fig. 2B zeigt eine konstruktive Ausführung, bei der die Magnetanordnungen 3a' und 3b' auf Magnetträgern 33a" bzw. 33b" fixiert und die Magnetträger durch ein eisenfreies U-Profilteil 35" zu einem Stator 3" des Linearmotors 1" verbunden sind. Das U-Profilteil 35" hält die Magnetreihen 3a' und 3b' auf konstantem Abstand und gewährleistet eine präzise Linearführung für die Relativbewegung der Spulenanordnung (des Läufers) 5 in Längsrichtung des Stators 3". Fig. 2C zeigt eine weitere Konfiguration des Linearmotors, bei der die letztgenannte Funktion dadurch realisiert ist, dass zwei langgestreckte und im Längsschnitt U-förmige Magnetträger 33a‴ und 33b‴ eingesetzt werden, die mit ihren einander zugewandten offenen Seiten aufeinandergesetzt sind und somit einen im Längsschnitt rechteckigen Stator 3‴ des Linearmotors 1‴ bilden.

Fig. 3 zeigt schematisch in einer Vorderansicht der Magnetspur 3 aus Fig. 1 eine beispielhafte Abfolge der Polaritäten der einzelnen Permanentmagnete 31. Es handelt sich hier um eine sogenannte Halbach-Konfiguration, bei der die Magnetisierungsrichtung benachbarter Permanentmagnete jeweils gegeneinander um 90 Grad in Richtung de Längsachse der Magnetspur gekippt ist und bei der aufgrund dessen der magnetische Fluss auf der einen Seite der Magnetspur (wo im Linearmotor die Spulenanordnung angeordnet ist) verstärkt, auf der anderen Seite jedoch nahezu auf Null reduziert ist. Eine solche spezielle Magnetspur-Konfiguration kommt ohne Eisenrückschlusseinrichtung aus und wird vorteilhaft mit einer Spulenanordnung der nachfolgend beschriebenen Art zu einem effizienten und kompakt bauenden Linearmotor zusammengestellt.

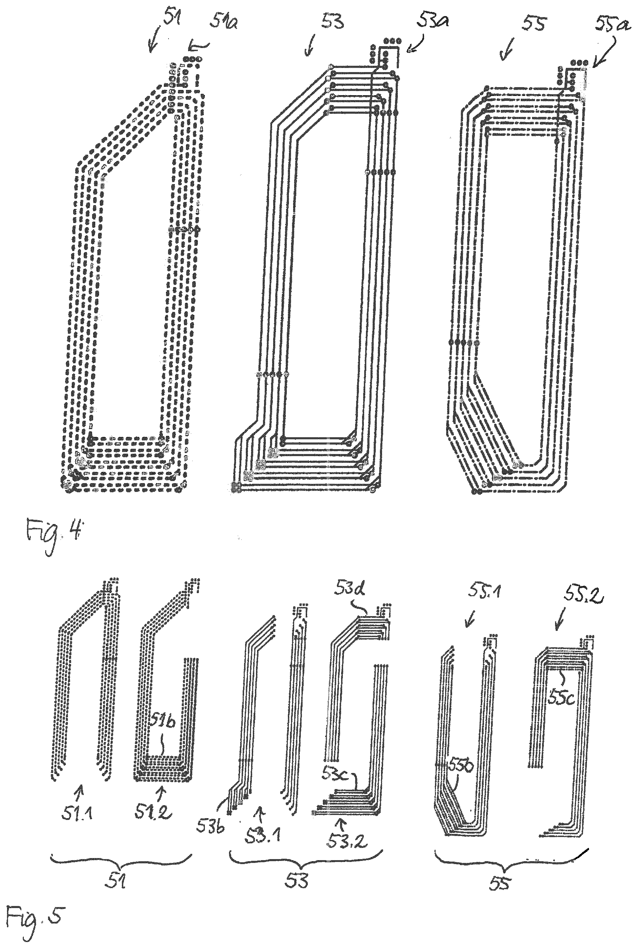

Fig. 4 zeigt die Leiterverläufe dreier Flachspulen 51, 53 und 55, die zusammen eine Spulengruppe der Spulenanordnung eines erfindungsgemäßen Linearmotors bilden, indem jeweils eine von ihnen an eine der drei Phasen eines Drei-Phasen-Wechselstromnetzes (Drehstromnetzes) angeschlossen ist. Zur Unterscheidung der Leiterzüge der einzelnen Spulen in nachfolgenden Darstellungen sind diese bei der Spule 51 gestrichelt, bei Spule 53 durchgezogen und bei Spule 55 strichpunktiert gezeichnet. Mit den offenen Kreisen sind jeweils Anschluss- bzw. Verwindungspunkte bezeichnet, deren Funktion und praktische Realisierung nachfolgend genauer beschrieben wird. Die Leiterzüge der Flachspulen sind jeweils als Spuren in einer oder zwei Leiterebenen eines mit leitenden Schichten versehenen, elektrisch und magnetisch isolierenden Trägers realisiert, was ebenfalls nachfolgend genauer erläutert wird.

Wie in der Figur zu erkennen ist, ist die Grundform des Leiterverlaufs aller drei Flachspulen 51, 53, 55 im Wesentlichen rechteckig, wobei jeweils eine virtuelle Ecke des Rechtecks entfällt durch gegenüber beiden angrenzenden Kanten geneigte Leiterabschnitte "überbrückt" ist. Bei jeder der Flachspulen ist nahe einer Ecke des Rechtecks ein außenliegender kleiner Anschlussbereich 51a, 53a, 55a vorgesehen.

Gemäß einem Aspekt der Erfindung ist jede der drei Flachspulen 51, 53, 55 derart unter Nutzung zweier Leiterebenen eines Trägers gebildet, dass alle drei Flachsplen ineinander verschachtelt bzw. einander überlappend platziert und dennoch im überwiegenden Teil des jeweiligen Leiterverlaufs jeder Spule Leiterzüge in beiden Leiterschichten vorhanden sind und somit beide Leiterschichten hochgradig effizient ausgenutzt werden können.

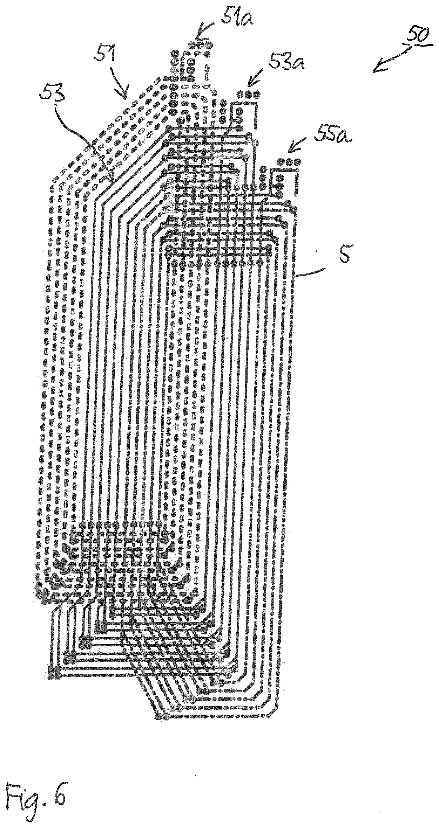

Dies ist in Zusammenschau der Fig. 5 und 6 wie folgt zu verstehen: Fig. 5 zeigt die Leiterzüge jeder der Flachspulen 51, 53, 55 jeweils in der ersten und zweiten Leiterebene eines (nicht dargestellten) Trägers, und Fig. 6 zeigt in Art einer Draufsicht, wie die drei Spulen ineinander verschachtelt sind.

Diese Verschachtelung bzw. Überlappung wird dadurch ermöglicht, dass in Teilabschnitten der Leiterverläufe jeder der drei Flachspulen (nachfolgend als "Überkreuzungsbereiche" bezeichnet) nur eine der beiden zur Verfügung stehenden Leiterebenen genutzt wird, während in der zweiten Ebene überkreuzende Leiterzüge einer anderen der drei Spulen verlaufen. Die Leiterverläufe sind derart gestaltet, dass sich maximal zwei der drei Spulen, an keiner Stelle aber alle drei, überkreuzen. Hierdurch wird es möglich, trotz des Vorhandenseins von drei Spulen mit zwei Leiterebenen auszukommen. Fig. 5 zeigt die jeweiligen Leiterzüge 51.1, 51.2 der Flachspule 51 in der ersten bzw. zweiten Leiterebene, der Leiterzüge 53.1 bzw. 53.2 der zweiten Flachspule in der ersten bzw. zweiten Leiterebene und der Leiterzüge 55.1 bzw. 55.2 der dritten Flachspule in der ersten bzw. zweiten Leiterebene.

Hier ist auch schematisch dargestellt, dass in einem Teil derjenigen Leiterabschnitte, die in lediglich einer der beiden Leiterebenen realisiert sind, eine Verbreiterung vorgesehen ist; vgl. die Abschnitte 51b; 53b, 53c und 53d, sowie 55b und 55c. Hierdurch wird die spezifische Strombelastung der jeweiligen Leiterzüge und somit die Widerstanderwärmung in diesen verringert, und die verbreiterten Leiterzüge können sogar als Wärmesenken für die jeweilige Flachspule dienen.

Bei der praktischen Realisierung der Flachspulen in zwei (oder mehr) Leiterebenen einer Mehrebenen-Leiterplatte werden die Übergänge zwischen den Leitungsverläufen in der ersten und zweiten Ebene (und ggfs. weiteren Ebenen) durch vertikale Durchkontaktierungen (sogenannte "Vias") realisiert, also durch Bohrungen, die leitfähig gefüllt bzw. deren Wandung leitfähig ausgekleidet ist und an die ein mit der jeweils anderen Ebene (oder mehreren anderen Ebenen; vgl. die nachfolgenden Erklärungen) zu verbindender Leiterzug herangeführt ist. Die Technologie der Realisierung von Durchgangskontaktierungen in Mehrebenen-Leiterplatten ist dem Fachmann ebenso bekannt wie die Strukturierung der Leiterschichten solcher Leiterplatten zur Bildung von Leiterzügen, so dass von entsprechenden Erläuterungen hier abgesehen werden kann.

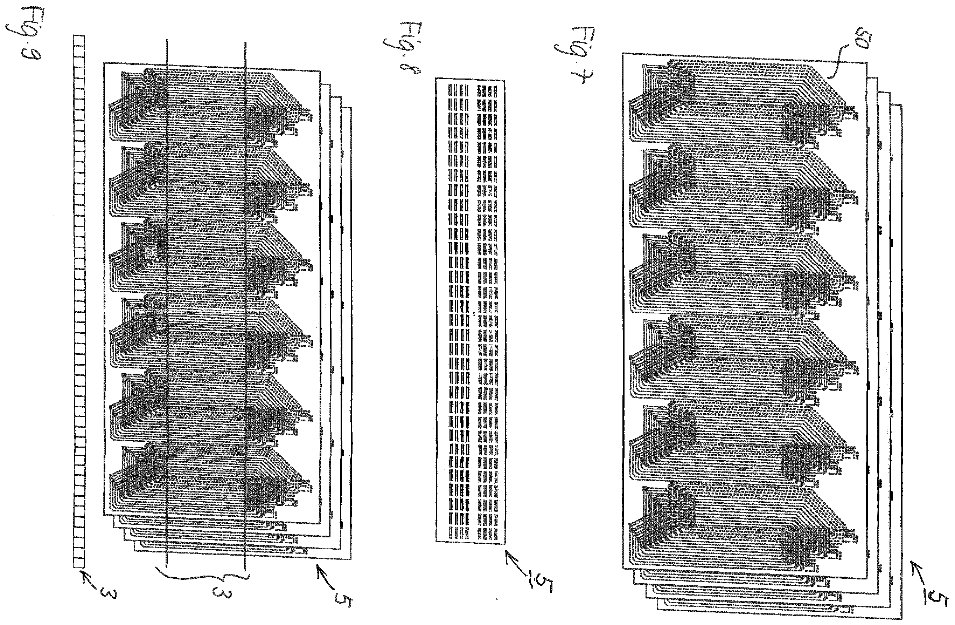

Fig. 7 zeigt schematisch eine Reihen- und Stapelanordnung von jeweils sechs nebeneinander gereihten Spulengruppen 50 des in Fig. 6 gezeigten Aufbaus, mit der insgesamt eine Ausführung der Spulenanordnung bzw. des Läufers 5 gemäß Fig. 1 oder 2 realisiert werden kann. Es sind beispielhaft vier (jeweils zweiseitig leitfähig beschichtete) Trägerschichten einer Mehrebenen-Leiterplatte gezeigt, von denen in jeder ein kombinierter Leiterverlauf realisiert ist, wie er in Fig. 5 dargestellt ist. Zudem sind die vier Schichten in einer Weise über die Durchkontaktierungen miteinander verbunden, dass die jeweiligen Leiterzüge vervierfacht werden. Es ist zu beachten, dass die Zahl der Trägerschichten hier lediglich exemplarisch ist; in der Praxis werden Mehrebenen-Leiterplatten mit bis zu 20 (oder mehr) Leiterebenen genutzt.

Fig. 8 zeigt in einer schematischen Längsschnittdarstellung der Spulenanordnung 5, dass jede der Leiterebenen in Folge der ineinander verschachtelten Spulen jeder Spulengruppe und der dichten Reihung der einzelnen Spulengruppen zur Gesamt-Spulenanordnung mit dicht aneinander angrenzenden Leiterzügen ausgenutzt ist. Es gibt praktisch keine größeren Bereiche der einzelnen Leiterschichten, die nicht für die Leiterzüge der Flachspulen ausgenutzt würden, so dass mit der vorgeschlagenen Konfiguration eine optimal dicht gepackte und mit hohen Stromstärken betreibbare Spulenanordnung eines Linearmotors zu realisieren ist.

Unter Bezugnahme auf Fig. 9, die in Art einer Draufsicht die mehrschichtige Spulenanordnung 5 aus Fig. 7 zusammen mit einer Magnetspur 3 zeigt, wird darauf hingewiesen, dass die Magnetspur vorzugsweise deutlich schmaler als die Spulenanordnung ist. Speziell ist deren Breite so bemessen, dass sie nur die geradlinig zueinander parallel verlaufenden Leiterabschnitte der Flachspulen der Spulenanordnung überdeckt, nicht aber die schräg oder parallel zur Magnetspur verlaufenden Abschnitte und Überkreuzungsabschnitte. Diese Konfiguration ist im Interesse einer Vergleichmäßigung des Kraftflusses und der Vermeidung störender Inhomogenitäten in dem auf die Magnetspur wirkenden Magnetfeld der Spulenanordnung gewählt.

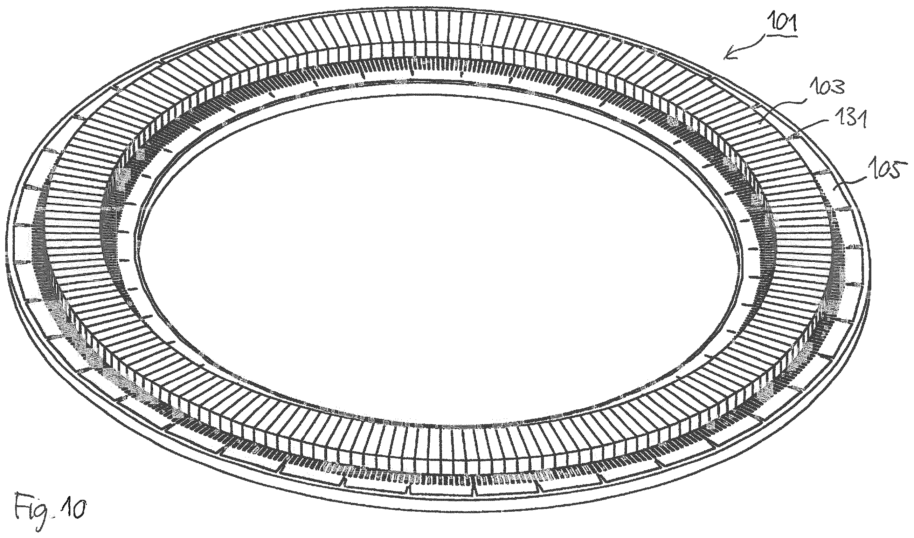

Fig. 10 zeigt in einer schematischen perspektivischen Darstellung, als weitere Ausführung eines Elektromotors, bei dem die Erfindung eingesetzt werden kann, einen rotatorischen Antrieb 101. Dieser umfasst einen kreisringförmigen Stator 103 aus in entsprechender Ringform aneinandergereihten, im Wesentlichen stabförmigen Permanentmagneten 131 und einen ebenfalls ringförmig geschlossenen Läufer 5 mit einer Spulenanordnung der oben spezifizierten Art. Wie bereits bei den weiter oben erläuterten Ausführungen erwähnt, kann die Zuordnung Stator/Läufer auch kinematisch umgekehrt sein. Strator und Läufer müssen nicht notwendigerweise Kreisform haben, und sie müssen auch nicht ringförmig geschlossen sein, sondern können auch die Form eines Kreissegments haben.

Zwischen den in Fig. 1 bis 2C gezeigten Linearmotoren und dem in Fig. 10 gezeigten rotatorischen Antrieb sind im Kontext der Erfindung auch "Zwischenstufen" möglich, d.h. Motoren mit beliebig bogenförmig gekrümmten, nicht in sich geschlossenen Statoren und Läufern. Es ist einzusehen, dass bei nicht-linearen Anordnungen sowohl die Magnetelemente der entsprechenden Magnetanordnungen als auch die Spulen der entsprechenden Spulenanordnungen eine von der weiter oben erwähnten Stab- bzw. Rechteckform abweichende Gestalt haben werden. Bei den Magnetelementen wird in der Regel eine Verjüngung zu einem Ende hin vorliegen, und die Spulen werden im Wesentlichen trapezförmig sein, oder es sind zwischen im Wesentlichen rechteckigen Spulen mit dem erfindungsgemäßen Aufbau trapez- oder dreieckförmige Spulen in die Spulenanordnung eingeschoben. Für die Ausgestaltung derartiger Spulen gelten gleichwohl die oben Erläuterungen von Aspekten der Erfindung und deren praktischer Realisierung weitgehend analog.

Die Ausführung der Erfindung ist auch im Übrigen nicht auf die in den Figuren dargestellten und oben beschriebenen beispielhaften Ausführungsformen beschränkt, sondern auch in vielgestaltigen Modifikationen und Kombinationen der einzelnen Konfigurationen und Merkmale, die im Schutzbereich der anhängenden Ansprüche liegen.

## Patentansprüche

1. Elektromotor, aufweisend:
- wenigstens eine Magnetspur (3), die eine Mehrzahl von in einer Längsrichtung oder einer Ringform gereihten Magnetelementen (31), aufweist, und
- wenigstens eine Spulenanordnung (5), die einen bezüglich der Magnetspur elektrisch und magnetisch im Wesentlichen nichtleitenden, derart konfigurierten Träger einschließt, dass die Spulenanordnung und die Magnetspur zu einer geführten Bewegung relativ zueinander befähigt sind, und die mindestens eine Gruppe von drei leitenden Flachspulen (51, 53, 55) einschließt,
wobei jede der drei Flachspulen mit einer Phase einer dreiphasigen Stromversorgung verbunden ist und wobei die Leiterzüge (51.1, 51.2, 53.1, 53.2, 55.1, 55.2) der drei Flachspulen der oder jeder Gruppe einander derart verschachtelt bzw. überlappend in einer ersten und zweiten durch eine isolierende Zwischenlage voneinander elektrisch isolierten Leiterebene des Trägers angeordnet sind, dass Teile des Leiterverlaufs jeder der drei Flachspulen übereinander und miteinander parallel verschaltet in der ersten und zweiten Leiterebene ausgeführt sind und je zwei der drei überlappenden Flachspulen Überkreuzungsbereiche haben, in denen die Leiterzüge der ersten Flachspule nur in der ersten und die Leiterzüge der zweiten Flachspule nur in der zweiten Leiterebene des Trägers verlaufen, **dadurch gekennzeichnet, dass** die Magnetspur mit den Magnetelementen und die Flachspulen der Spulenanordnung in Abstimmung aufeinander derart bemessen sind, dass die Überkreuzungsbereiche der Flachspulen außerhalb der Projektion der Magnetelemente auf die Spulenanordnung liegen.

2. Elektromotor nach Anspruch 1, wobei die Magnetspur eine Mehrzahl von Magnetelementen (31) in Halbach-Array-Konfiguration aufweist.

3. Elektromotor nach Anspruch 1 oder 2, wobei die Magnetspur (3) einem Stator
und die Spulenanordnung (5) einem Läufer des Elektromotors zugeordnet ist und insbesondere der Stator im Wesentlichen die Gestalt eines langgestreckten oder ringförmig geschlossenen U-Profils oder Rechtecks aufweist und der Läufer in Anpassung an die Gestalt des Stators plattenoder bandförmig derart ausgeführt ist, dass er sich im Inneren des U-Profils oder Rechtecks bewegen kann.

4. Elektromotor nach einem der vorangehenden Ansprüche,
wobei die Spulenanordnung (5) zwei oder mehr Gruppen aus je drei jeweils mit einer Phase der dreiphasigen Stromversorgung verbundenen Flachspulen (51, 53, 55) umfasst, die in einer Längsrichtung oder in Ringform auf bzw. in dem Träger aneinandergereiht sind.

5. Elektromotor nach einem der vorangehenden Ansprüche,
wobei der Träger als Mehrebenen-Leiterplatte ausgeführt ist und jeweils genau zwei benachbarte Leiterebenen der Mehrebenen-Leiterplatte zur Bildung der drei zusammengehörigen, überlappenden Flachspulen (51, 53, 55) strukturiert sind, wobei in den Überkreuzungsbereichen die Übergänge eines Flachspulenverlaufes von der ersten in die zweite Leiterebene bzw. umgekehrt mittels vertikaler Durchkontaktierungen ausgeführt sind.

6. Elektromotor nach einem der vorangehenden Ansprüche,
wobei der Träger als Mehrebenen-Leiterplatte mit 2m Leiterebenen (m≥2) ausgeführt ist, in der jede der drei zusammengehörigen überlappenden Flachspulen (51, 53, 55) einer Gruppe 2 bis m in Reihe geschaltete im Wesentlichen identische Leiterzüge (51.1, 51.2, 53.1, 53.2, 55.1, 55.2) umfasst, wobei die elektrischen Verbindungen zwischen den in Reihe geschalteten Leiterzügen mittels vertikaler Durchkontaktierungen durch die Mehrebenen-Leiterplatte ausgeführt sind.

7. Elektromotor nach Anspruch 5 oder 6,
wobei jede der Flachspulen (51, 53, 55) einen kleinen Anschluss- und Durchkontaktierungs-Bereich aufweist, der unmittelbar an einer kurzen Seite der jeweiligen Flachspule angeordnet ist und in dem Durchkontaktierungen zur Verbindung der übereinander angeordneten, in Reihe geschalteten Leiterzüge und zum externen Anschluss der Flachspule platziert sind, wobei eine Dimension des Anschluss- und Durchkontaktierungsbereichs, insbesondere dessen Länge in Längsrichtung einer langgestreckten Flachspule, weniger als 10%, insbesondere weniger als 5%, der entsprechenden Dimension der Flachspule beträgt.

8. Elektromotor nach Anspruch 7,
wobei der kleine Anschluss- und Durchkontaktierungs-Bereich jeweils nahe einer Ecke einer polygonalen Flachspulen-Konfiguration positioniert ist und einen im Wesentlichen hakenförmigen Leiterabschnitt umfasst.

9. Elektromotor nach einem der Ansprüche 5 bis 8,
wobei die durch Strukturierung der jeweils zwei Leiterebenen der Mehrebenen-Leiterplatte gebildeten zusammengehörigen drei Flachspulen (51, 53, 55) im Wesentlichen rechteckförmig konfiguriert und derart verschachtelt bzw. überlappend angeordnet sind, dass die langen Seiten der drei Flachspulen in der ersten und zweiten Leiterebene jeweils parallel zueinander verlaufen und innerhalb des Rechtecks einer der drei Flachspulen jeweils der größte Teils des Leiterverlaufes je einer entsprechenden Seite der beiden anderen Flachspulen angeordnet ist.

10. Elektromotor nach einem der Ansprüche 5 bis 8,
wobei die durch Strukturierung der jeweils zwei Leiterebenen der Mehrebenen-Leiterplatte gebildeten zusammengehörigen drei Flachspulen (51, 53, 55) im Wesentlichen trapezförmig konfiguriert und derart verschachtelt bzw. überlappend angeordnet sind, dass die nicht-parallelen Seiten der Trapezformen der drei Flachspulen in der ersten und zweiten Leiterebene jeweils parallel zueinander verlaufen und innerhalb des Trapezes einer der drei Flachspulen jeweils der größte Teils des Leiterverlaufes je einer entsprechenden Seite der beiden anderen Flachspulen angeordnet ist.

11. Elektromotor nach Anspruch 9 oder 10, wobei alle Leiter aller drei
Flachspulen (51, 53, 55) an den langen Seiten der rechteckförmigen Leiterkonfigurationen bzw. an den nicht-parallelen Seiten der trapezförmigen Leiterkonfigurationen jeweils gleichen Abstand zueinander haben und innerhalb der zusammengehörigen drei Flachspulen kein größerer Abstandsbereich vorhanden ist.

12. Elektromotor nach Anspruch 11, wobei der Abstand zwischen den
benachbarten Leiterzügen (51.1, 51.2, 53.1, 53.2, 55.1, 55.2) kleiner als deren Breite, insbesondere kleiner als die Hälfte von deren Breite, ist.

13. Elektromotor nach einem der Ansprüche 9 bis 12,
wobei in dem im Wesentlichen rechteck- oder trapezförmigen Leiterverlauf der Flachspulen (51, 53, 55) jeweils eine virtuelle Ecke des Rechtecks oder Trapezes durch schräg zu den angrenzenden Seiten verlaufende Leiterabschnitte ersetzt ist.

14. Elektromotor nach einem der vorangehenden Ansprüche, wobei mindestens
ein Teil der Leiterverläufe mindestens in einem Teil der Überkreuzungsbereiche verbreitert sind und aufgrund der durch die Verbreiterung verringerten Strombelastung als Temperatursenken der jeweiligen Flachspule (51, 53, 55) wirken.

## Claims

1. Electric motor, having:
- at least one magnetic track (3), which has a plurality of magnetic elements (31) arranged in a longitudinal direction or a ring shape, and
- at least one coil arrangement (5), which includes a carrier, which is electrically and magnetically substantially non-conductive with respect to the magnetic track, configured in such a way that the coil arrangement and the magnetic track are able to move in a guided manner relative to one another, and which includes at least one group of three conductive flat coils (51, 53, 55),
wherein each of the three flat coils is connected to a phase of a three-phase power supply and wherein the conductor tracks (51.1, 51.2, 53.1, 53.2, 55.1, 55.2) of the three flat coils of the or each group are arranged interleaved or overlapping in a first and second conductor layer of the carrier, which are electrically insulated from each other by an insulating intermediate layer, in such a way that parts of the conductor path of each of the three flat coils are designed one above the other and connected in parallel in the first and second conductor layer and two of the three overlapping flat coils have crossover regions in which the conductor tracks of the first flat coil only run in the first and the conductor tracks of the second flat coil only run in the second conductor layer of the carrier,
**characterised in that**
the magnetic track with the magnetic elements and the flat coils of the coil arrangement are dimensioned in coordination with one another such that the crossover regions of the flat coils lie outside the projection of the magnetic elements onto the coil arrangement.

2. Electric motor according to Claim 1, wherein the magnetic track has a plurality of magnetic elements (31) in a Halbach array configuration.

3. Electric motor according to Claim 1 or 2, wherein the magnetic track (3) is associated with a stator and the coil arrangement (5) is associated with a rotor of the electric motor and in particular the stator has substantially the shape of an elongated or annular closed U-profile or rectangle and the rotor is designed to be plate-shaped or strip-shaped so as to match the shape of the stator in such a way that it can move inside the U-profile or rectangle.

4. Electric motor according to one of the preceding claims, wherein the coil arrangement (5) comprises two or more groups of three flat coils (51, 53, 55) respectively connected to a phase of the three-phase power supply, which are arranged consecutively in a longitudinal direction or in a ring shape on or in the carrier.

5. Electric motor according to one of the preceding claims, wherein the carrier is designed as a multi-layer printed circuit board and respectively exactly two adjacent conductor layers of the multi-layer printed circuit board are structured to form the three associated, overlapping flat coils (51, 53, 55), wherein in the crossover regions, the transitions of a flat coil path from the first to the second conductor layer and vice versa are formed by means of vertical vias.

6. Electric motor according to one of the preceding claims, wherein the carrier is designed as a multi-layer printed circuit board with 2m conductor layers (m≥2), in which each of the three associated overlapping flat coils (51, 53, 55) of a group comprises 2 to m substantially identical conductor tracks (51.1, 51.2, 53.1, 53.2, 55.1, 55.2) connected in series, wherein the electrical connections between the conductor tracks connected in series are designed by means of vertical vias through the multi-layer printed circuit board.

7. Electric motor according to Claim 5 or 6, wherein each of the flat coils (51, 53, 55) has a small connection and via region, which is arranged directly on a short side of the respective flat coil and in which vias are placed for connecting the conductor tracks arranged one above the other and connected in series and for the external connection of the flat coil, wherein a dimension of the connection and via region, in particular its length in a longitudinal direction of an elongated flat coil, is less than 10 %, in particular less than 5 %, of the corresponding dimension of the flat coil.

8. Electric motor according to Claim 7, wherein the small connection and via region is respectively positioned near a corner of a polygonal flat coil configuration and comprises a substantially hook-shaped conductor section.

9. Electric motor according to one of Claims 5 to 8, wherein the associated three flat coils (51, 53, 55) formed by structuring the respective two conductor layers of the multi-layer printed circuit board are configured to be substantially rectangular and are arranged interleaved and overlapping in such a way that the long sides of the three flat coils run respectively parallel to one another in the first and second conductor layer, and respectively the largest part of the conductor path of a corresponding side of the two other flat coils is arranged within the rectangle of one of the three flat coils.

10. Electric motor according to one of Claims 5 to 8, wherein the associated three flat coils (51, 53, 55) formed by structuring the respective two conductor layers of the multi-layer printed circuit board are configured to be substantially trapezoidal and are arranged interleaved and overlapping in such a way that the non-parallel sides of the trapezoidal shapes of the three flat coils run respectively parallel to one another in the first and second conductor layer, and respectively the largest part of the conductor path of a corresponding side of the two other flat coils is arranged within the trapezoid of one of the three flat coils.

11. Electric motor according to Claim 9 or 10, wherein all conductors of all three flat coils (51, 53, 55) respectively have the same distance to one another on the long sides of the rectangular conductor configuration or on the non-parallel sides of the trapezoidal conductor configuration and there is no greater distance region within the associated three flat coils.

12. Electric motor according to Claim 11, wherein the distance between the adjacent conductor tracks (51.1, 51.2, 53.1, 53.2, 55.1, 55.2) is smaller than their width, in particular smaller than half their width.

13. Electric motor according to one of Claims 9 to 12, wherein in the substantially rectangular or trapezoidal conductor path of the flat coils (51, 53, 55), respectively one virtual corner of the rectangle or trapezoid is replaced by conductor sections running obliquely to the adjacent sides.

14. Electric motor according to one of the preceding claims, wherein at least part of the conductor paths are widened at least in part of the crossover regions and, due to the current load reduced by the widening, act as heat sinks for the respective flat coil (51, 53, 55).

## Revendications

1. Moteur électrique, comportant :
- au moins une piste magnétique (3), qui comporte une pluralité d'éléments magnétiques (31) disposés dans une direction longitudinale ou sous une forme annulaire et
- au moins un ensemble de bobines (5) qui comporte un support sensiblement non conducteur électrique et magnétique en rapport à la piste magnétique, configuré de telle sorte que l'ensemble de bobines et la piste magnétique soient aptes à un déplacement guidé l'un par rapport à l'autre et qui inclut l'au moins un groupe de trois bobines plates (51, 53, 55) conductrices,
chacune des trois bobines plates étant connectée avec une phase d'une alimentation électrique triphasée et les circuits conducteurs (51.1, 51.2, 53.1, 53.2, 55.1, 55.2) des trois bobines plates du ou de chaque groupe étant disposés en étant emboîtés ou en se chevauchant dans un premier et un deuxième plans de conducteurs du support, électriquement isolés l'un par rapport à l'autre, de telle sorte que des parties du trajet des conducteurs de chacune des trois bobines plates soient réalisées en étant emboitées à la parallèle les unes des autres et en superposition dans le premier et le deuxième plan de conducteurs et que chaque fois deux des trois bobines plates se chevauchant disposent de zones de croisement, dans lesquelles les circuits conducteurs de la première bobine plate ne s'écoulent que dans le premier plan et les circuits conducteurs de la deuxième bobine plate ne s'écoulent que dans le deuxième plan du support,
**caractérisé en ce que**
la piste magnétique avec les éléments magnétiques et les bobines plates sont dimensionnées en accord les unes avec les autres, de telle sorte que les zones de croisement des bobines plates se situent hors de la projection des éléments magnétiques sur l'ensemble de bobines.

2. Moteur électrique selon la revendication 1, la piste magnétique comportant une pluralité d'éléments magnétique en configuration de tableau Halbach.

3. Moteur électrique selon la revendication 1 ou 2, la piste magnétique (3) étant associée à un stator et l'ensemble de bobines (5) étant associé à un rotor du moteur électrique et notamment le stator présentant sensiblement la forme d'un profilé en U fermé, allongé ou de forme annulaire ou d'un rectangle et en adaptation à la forme du stator, le rotor étant conçu en forme de plaque ou de bande, de telle sorte qu'il puisse se déplacer à l'intérieur du profilé en U ou du rectangle.

4. Moteur électrique selon l'une quelconque des revendications précédentes, l'ensemble de bobines (5) comprenant deux groupes ou plus de chaque fois trois bobines plates (51, 53, 55) connectées avec une phase de l'alimentation électrique triphasée, qui sont juxtaposées dans une direction longitudinale ou en forme annulaire sur ou dans le support.

5. Moteur électrique selon l'une quelconque des revendications précédentes, le support étant conçu sous la forme d'une carte de circuit imprimé à plans multiples et chaque fois précisément deux plans de conducteurs voisins de la carte de circuit imprimé à plans multiples étant structurés pour créer les trois bobines plate (51, 53, 55) apparentées, se chevauchant, dans les zones de croisement, les passages d'un trajet de bobine plate du premier dans le deuxième plan de conducteurs ou inversement étant réalisés par connexion transversale verticale.

6. Moteur électrique selon l'une quelconque des revendications précédentes, le support étant conçu sous la forme d'une carte de circuit imprimé à plans multiples, avec 2m plans de conducteurs (m ≥ 2) dans laquelle chacune des trois bobines plates (51, 53, 55) apparentées d'un groupe comprend de 2 à m circuits conducteurs (51.1, 51.2, 53.1, 53.2, 55.1, 55.2) sensiblement identiques, montés en série, les connexions électriques entre les circuits conducteurs montés en série étant réalisées par connexion transversale verticale à travers la carte de circuit imprimé à plans multiples.

7. Moteur électrique selon la revendication 5 ou 6, chacune des bobines plates (51, 53, 55) comportant une petite zone de raccordement et de connexion transversale, qui est disposée directement sur un côté court de la bobine plate concernée et dans laquelle sont placées des connexions transversales, pour la connexion des circuits conducteurs superposés, montés en série et pour le raccordement externe des bobines plates, une dimension de la zone de raccordement et de connexion transversale, notamment sa longueur dans la direction longitudinale d'une bobine plate allongée s'élevant à moins de 10 %, notamment à moins de 5 % de la dimension correspondante de la bobine plate.

8. Moteur électrique selon la revendication 7, la petite zone de raccordement et de connexion transversale étant positionnée chaque fois à proximité d'un angle d'une configuration polygonale de bobines plates et comprenant un segment de conducteur sensiblement en forme de crochet.

9. Moteur électrique selon l'une quelconque des revendications 5 à 8, les trois bobines plates (51, 53, 55) apparentées constituées par structuration des chaque fois deux plans de conducteurs de la carte de circuit imprimé à plans multiples étant configurées sensiblement de forme rectangulaire et étant disposées en étant emboîtées ou en se chevauchant de telle sorte que les côtés longs des trois bobines plates s'écoulent chaque fois à la parallèle les uns des autres dans le premier et le deuxième plans de conducteurs et que chaque fois à l'intérieur du rectangle de l'une des trois bobines plates, soit disposée chaque fois la plus grande partie du trajet des conducteurs de chaque fois un côté correspondant des deux autres bobines plates.

10. Moteur électrique selon l'une quelconque des revendications 5 à 8, les trois bobines plates (51, 53, 55) apparentées constituées par structuration des chaque fois deux plans de conducteurs de la carte de circuit imprimé à plans multiples étant configurées sensiblement de forme trapézoïdale et étant disposées en étant emboîtées ou en se chevauchant de telle sorte que les côtés non parallèles des formes trapézoïdales des trois bobines plates s'écoulent chaque fois à la parallèle les uns des autres dans le premier et le deuxième plans de conducteurs et que chaque fois à l'intérieur du trapèze de l'une des trois bobines plates, soit disposée chaque fois la plus grande partie du trajet des conducteurs de chaque fois un côté correspondant des deux autres bobines plates.

11. Moteur électrique selon la revendication 9 ou 10, tous les conducteurs de toutes les trois bobines plates (51, 53, 55) sur les côtés longs des configurations rectangulaires de conducteurs ou sur les côtés non parallèles des configurations trapézoïdales présentant chaque fois un écart mutuel identique et à l'intérieur des trois bobines plates apparentées, aucune zone d'écart supérieur n'étant présente.

12. Moteur électrique selon la revendication 11, l'écart entre des circuits conducteurs (51.1, 51.2, 53.1, 53.2, 55.1, 55.2) voisins étant inférieur à leur largeur.

13. Moteur électrique selon l'une quelconque des revendications 9 à 12, dans le trajet de conducteurs sensiblement rectangulaire ou trapézoïdal des bobines plates (51, 53, 55), chaque fois un angle virtuel du rectangle ou du trapèze étant remplacé par des segments de conducteurs s'écoulant en oblique par rapport aux côtés adjacents.

14. Moteur électrique selon l'une quelconque des revendications précédentes, au moins une partie des trajets des conducteurs étant élargie au moins dans une partie des zones de croisement et du fait de la charge électrique réduite par l'élargissement, agissant en tant que puits de température de la bobine plate (51, 53, 55) concernée.
